# EUROPEAN PATENT SPECIFICATION

(11) **EP 2 476 789 B1**
(45) Date of publication and mention of the grant of the patent: **30.03.2016**
(21) Application number: 12150008.6
(22) Date of filing: 02.01.2012
(51) Int. Cl.: D05B 57/14, D05B 69/02

(54) **Sewing Machine**
Nähmaschine
Machine à coudre

(30) Priority: 04.01.2011 JP 2011000093
(43) Date of publication of application: 18.07.2012
(73) Proprietor: JUKI Corporation, Tama-shi Tokyo 206-8551 (JP)
(72) Inventor: Tsukioka, Takashi, Tokyo (JP); Kumon, Satoshi, Tokyo (JP); Yanagisawa, Masato, Tokyo (JP)
(74) Representative: Hoeger, Stellrecht & Partner Patentanwälte mbB

(56) References cited:
- JP-A- H03 111 081
- JP-A- H06 165 886
- JP-A- S63 189 192

## Description

The present invention relates to a sewing machine capable of forming a perfect stitch, in particular, to a sewing machine in accordance with the preamble of claim 1.

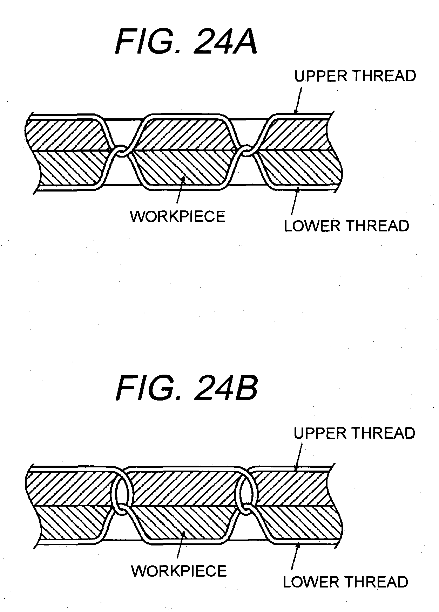

Stitches formed by a sewing machine may include a perfect stitch or a hitch stich. As shown in Fig. 24A, the perfect stich is formed such that an upper thread and a lower thread are entangled in a symmetric manner. As shown in Fig. 24B, the hitch stitch formed such that an upper thread forms a loop.

With the perfect stitch, a tension of the upper thread and a tension of the lower thread act on a cloth in a well-balanced manner, resulting in an excellent finish. Thus, a sewn product of high sewing quality can be provided. On the other hand, with the hitch stitch, the tension of the upper thread easily becomes weak and unbalanced with the tension of the lower thread, causing a bad influence such as loosening of a seam, resulting in a deterioration in the sewing quality.

The cause of an occurrence of the hitch stitch includes a relationship between a relative positional relation of a needle and a shuttle and a cloth feeding direction.

Thus, in a conventional sewing machine, as disclosed in JPH 03-111081 A and having the features defined in the preamble of claim 1, a needle and a shuttle base are rotated around a center line of the needle to change an arrangement relationship between the needle and the shuttle with respect to a cloth feeding direction so that an occurrence of a hitch stitch is prevented and a seam is formed with perfect stitch.

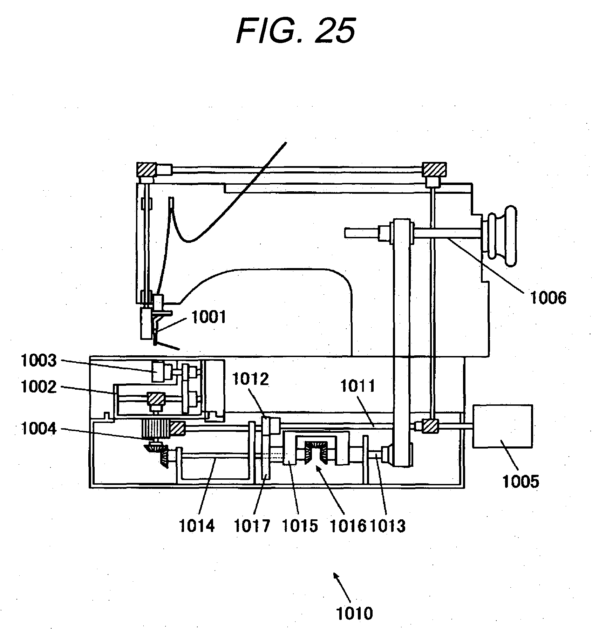

A conventional sewing machine shown in Fig. 25 includes a shuttle attaching base 1002 mounted on a sewing machine frame so as to be rotatable around a center line of a needle 1001, a shuttle driving shaft 1004 having a shaft center passing through a rotating center of the shuttle attaching base 1002 and serving to transmit, to a shuttle 1003, a torque sent from a sewing machine motor as a rotating power for the shuttle 1003, a shuttle phase adjusting mechanism 1010 for offsetting a change in a phase in a rotation of the shuttle 1003 through a rotation of the shuttle attaching base 1002, and a stepping motor 1005 serving as a driving source for rotating the shuttle attaching base 1002 and the needle 1001.

The shuttle phase adjusting mechanism 1010 includes a first spur gear 1012 provided on a feeding shaft 1011 having a horizontal axis, a right lower shaft 1013 and a left lower shaft 1014 which are disposed below the feeding shaft on the same horizontal axis, a differential gear mechanism 1016 provided between the right lower shaft 1013 and the left lower shaft 1014, a bracket 1015 supporting the differential gear mechanism 1016, and a second spur gear 1017 for transmitting a rotation of the first spur gear 1012 to the bracket 1015.

The stepping motor 1005 serves as a driving source for rotating the shuttle attaching base 1002 as well as the first and second spur gears 1012, 1017.

With this configuration, when the stepping motor 1005 is driven to rotate the shuttle attaching base 1002 and the needle 1001 to avoid the hitch stitch, the bracket 1015 of the differential gear mechanism is also rotated with the rotation of the shuttle attaching base 1002, thereby making an appropriate phase difference between the right lower shaft 1013 and the left lower shaft 1014, so that a phase of the shuttle 1003 is adjusted such that a timing for catching an upper thread through a hook of the shuttle 1003 with respect to the needle 1001 is kept appropriate even when the shuttle attaching base 1002 is rotated.

Further, a sewing machine described in JPH 06-165886 A has a rotating mechanism in an X-Y moving mechanism so that the cloth held by the X-Y moving mechanism can be rotated around a needle in order to avoid a hitch stitch.

According to the sewing machine described in JPH 03-111081 A, however, when the power supply to the sewing machine including the stepping motor 1005 is turned OFF, the upper shaft 1006, the right lower shaft 1013, the left lower shaft 1014, the shuttle attaching base 1002 and other components become freely movable (easily rotated upon receipt of an external force). Thus, when the shuttle attaching base 1002 is rotated by an external force, the bracket 1015 of the differential gear mechanism 1016 is also rotated. Therefore, the right and left lower shafts 1013, 1014 obtaining a power from the sewing machine motor are also rotated so that the rotation is also transmitted to the upper shaft 1006 and causes the needle 1001 to move. As a result, specifically when the needle 1001 is moved downward, it may hit a surrounding object such as a cloth holding member so that the needle 1001, the needle bar or their power transmission mechanisms may be damaged.

According to the sewing machine described in JPH 06-165886 A, because the cloth is held by cloth holding members of the X-Y moving mechanism and the rotating mechanism, a load to driving sources of the respective mechanisms is increased, which may cause loss of synchronism. As a result, a seam may be disordered, an avoidance of the hitch stitch may become imperfect. Further, high speed operation cannot be achieved, and a structure around the cloth may become too large for a practical use.

It is an object of the invention to form a perfect stitch irrespective of a cloth feeding direction and to prevent an accidental vertical motion of a needle.
This object is solved by a sewing machine in accordance with claim 1.

According to a first aspect of the invention, a sewing machine is provided. The sewing machine includes a sewing machine motor, a needle bar holding a needle, wherein the needle bar has a vertical center line and moves up and down along the center line interlockingly with the sewing machine motor, a shuttle configured to rotate interlockingly with the sewing machine motor to entangle an upper thread with a lower thread, a needle bar rotating mechanism configured to rotate the needle bar about the center line, a rotation base rotatably supporting the shuttle and supported by a sewing machine frame so as to be rotatable about the center line of the needle bar with respect to the sewing machine frame, a rotation drive motor serving as a driving source of a rotating motion of the rotation base, and a differential transmission mechanism including an input shaft coupled to the sewing machine motor and an output shaft coupled to the shuttle. The differential transmission mechanism is configured such that a phase difference between the input shaft and the output shaft is adjustable. The input shaft and the output shaft are aligned on the center line of the needle bar. The differential transmission mechanism includes a support frame disposed so as to be rotatable around the input shaft and the output shaft, a transmission member rotatably supported by the support frame and transmits a rotating force between the input shaft and the output shaft such that a rotation direction is reversed, a first driven member provided on the support frame and to which a rotating force for the support frame is input, a second driven member provided on the rotation base and to which a rotating force for the rotation base is input, a first driver member via which the rotating force is input from the rotation drive motor to the first driven member, and a second driver member via which the rotating force is input from the rotation drive motor to the second driven member. An amount of a rotation transmission from the first driver member to the first driven member is half an amount of a rotation transmission from the second driver member to the second driven member. The first driver member and the second driver member are provided on the same shaft in a fixed manner such that the first driver member and the second driver member rotate simultaneously.

According to a second aspect of the invention, the rotation drive motor also serves as a driving source of a rotating motion of the needle bar through the needle bar rotating mechanism.

According to a third aspect of the invention, the differential transmission mechanism has a differential gear mechanism.

According to a fourth aspect of the invention, the differential transmission mechanism has a differential gear mechanism.

According to a fifth aspect of the invention, the rotating force from the first driver member to the first driven member and the rotating force from the second driver member to the second driven member are transmitted by using a belt and a pulley or a sprocket, respectively.

According to a sixth aspect of the invention, the rotating force from the first driver member to the first driven member and the rotating force from the second driver member to the second driven member are transmitted by using gears, respectively.

According to a seventh aspect of the invention, the sewing machine further includes a moving mechanism configured to move a workpiece on a plane perpendicular to the center line of the needle bar; and
sewing control means which, if a direction to move the workpiece by the moving mechanism is within a range in which a hitch stitch occurs, drives the rotation drive motor such that the direction to move the workpiece becomes outside the range.

According to the invention, in a situation where a hitch stitch is going to be generated, the rotation base is rotated by means of the rotation drive motor so that the shuttle is rotated around the center line of the needle bar. Consequently, it is possible to change the relationship between the cloth feeding direction and relative positions of the needle and the shuttle, that is, the relationship indicative of a direction from which the shuttle catches the upper thread with respect to the needle. Therefore, it is possible to carry out an adjustment to always form a perfect stitch.

When the revolving movement of the shuttle is carried out, a phase thereof varies so that a timing for catching the upper thread by the hook changes. Therefore, the phase is adjusted by the differential transmission mechanism. More specifically, when the rotation base is rotated in the same direction as the rotating direction of the output shaft of the differential transmission mechanism, the shuttle generates a phase delay of the rotated angle, and when the rotation base is rotated in a reverse direction to the rotating direction of the output shaft of the differential transmission mechanism, the shuttle generates a phase advance of the rotated angle.

On the other hand, when the support frame is rotated in the same direction as the rotating direction of the output shaft, the phase advances by twice the rotated angle, and when the support frame is rotated in the reverse direction, the phase delays by twice the rotated angle. Accordingly, it is possible to adjust the phase by rotating the support frame in either of the directions depending on the rotating and moving direction and the moving speed of the rotation base.

By setting the amount of the rotation transmission from the first driver member to the first driven member to be half the amount of the rotation transmission from the second driver member to the second driven member and inputting the rotating force to the first and second driven members in the same direction, it is possible to eliminate a variation in a phase while revolving and moving the shuttle.

Furthermore, the first driver member and the second driver member are fixedly provided on the same shaft to carry out a simultaneous rotation. In the case in which an external force is applied to the rotation base and the rotation base is thus rotated when the sewing machine motor and the rotation drive motor are not turned on and are in a free state, therefore, the rotation is transmitted from the second driven member to the second driver member which are provided on the rotation base, and furthermore, the first driver member coupled through the same shaft carries out a rotation at an equal angle to that of the second driver member and the rotation is transmitted from the first driver member to the first driven member. As a result, the support frame carries out a rotation at a half of the angle of the rotation base. Consequently, the output shaft carries out the rotation at an equal angle in the same direction, while the input shaft does not carry out the rotation.

Accordingly, the rotation is not transmitted to the upstream side of the input shaft even if the rotation base carries out the rotation. Consequently, the needle bar is prevented from moving together.

In a configuration in which the moving mechanism capable of moving a workpiece in an optional direction is provided, and a sewing control for driving the rotation drive motor is performed if the moving direction of the workpiece is within the range in which a hitch stitch occurs, so that it becomes outside the range, it is possible to effectively suppress the generation of the hitch stitch for stitching in any direction with respect to the workpiece and to carry out a sewing work in a perfect stitch, thereby enhancing sewing quality dramatically.

Other aspects and advantages of the invention will be apparent from the following description, the drawings and the claims.

The following description of embodiments of the invention serves to explain the invention in greater detail in conjunction with the drawings. These show:
Fig. 1: a perspective view showing a sewing machine according to a first embodiment;
Fig. 2: a view schematically showing a structure of a mechanism of the sewing machine;
Fig. 3: a perspective view showing a shuttle and a differential transmission mechanism;
Fig. 4: a sectional view taken along a center line of a needle bar and a Y - Z plane in the shuttle and the differential transmission mechanism;
Fig. 5: a front view showing the shuttle and the differential transmission mechanism;
Fig. 6: a plan view showing the shuttle and the differential transmission mechanism;
Fig. 7: a bottom view showing the shuttle and the differential transmission mechanism;
Fig. 8A: a diagram illustrating a state before a shuttle transmission portion rotates the shuttle by a rotation of a rotation base;
Fig. 8B: a diagram illustrating a state in which the rotation base is rotated,
Fig. 9A: a diagram illustrating a state before an inter-shaft transmission portion rotates an output shaft by a rotation of a support frame:
Fig. 9B: a diagram illustrating a state in which the support frame is rotated;
Fig. 10A: a diagram illustrating a state before the shuttle transmission portion rotates the shuttle by the rotations of the rotation base and the support frame;
Fig. 10B: a diagram illustrating a state in which the rotation base and the support frame are rotated;
Fig. 11: a block diagram showing a control system of the sewing machine;
Fig. 12: a diagram illustrating a sewing direction in which a hitch stitch is generated, as a shaded area H on the X-Y plane, in which a direction of a reference line from a position of a center line C of the needle bar toward a position of a rotating center line of the shuttle is set to be a reference (0°);
Fig. 13: a flow chart of a hitch stitch avoiding control;
Fig. 14: a perspective view showing a shuttle and a differential transmission mechanism according to a second embodiment;
Fig. 15: a sectional view taken along a center line of a needle bar and the Y-Z plane in the shuttle and the differential transmission mechanism;
Fig. 16: a perspective view showing the shuttle and the differential transmission mechanism, a part of which is omitted;
Fig. 17: a bottom view showing the shuttle and the differential transmission mechanism;
Fig. 18: a sectional view showing the shuttle and the differential transmission mechanism taken along the line W-W in Fig. 15;
Fig. 19: a diagram illustrating an operation of an inter-shaft transmission portion;
Fig. 20: a perspective view showing a shuttle transmission portion,
Fig. 21: a perspective view showing the shuttle transmission portion in another direction,
Fig. 22: a perspective view showing another example of the inter-shaft transmission portion using a gear mechanism and a belt mechanism in combination, a partial structure being omitted,
Fig. 23: a view for explaining a principle of the inter-shaft transmission portion according to another example,
Fig. 24A: a diagram illustrating a perfect stitch;
Fig. 24B a diagram illustrating a hitch stitch, and
Fig. 25: a view showing a schematic structure of a conventional sewing machine which is designed for improving the hitch stitch.

### First Embodiment

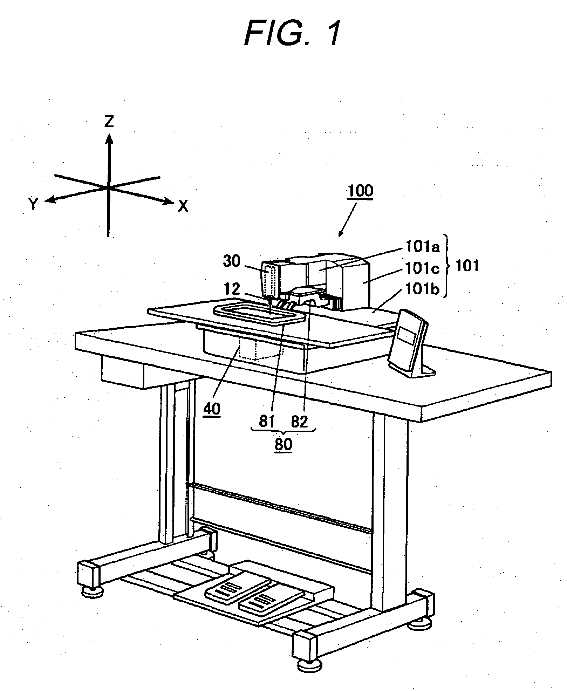

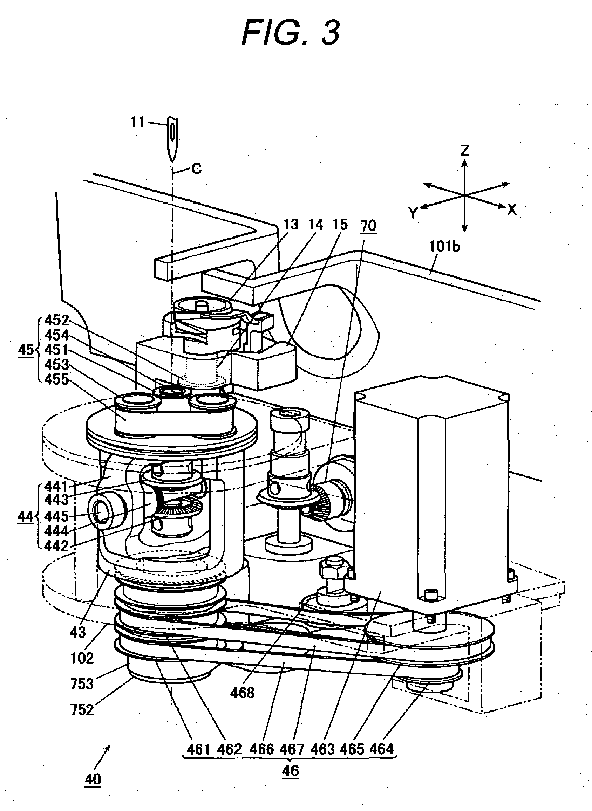

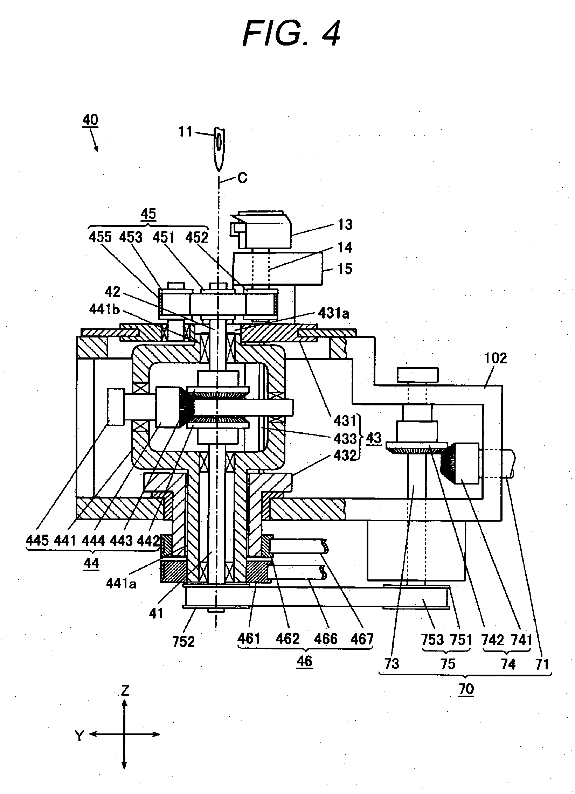

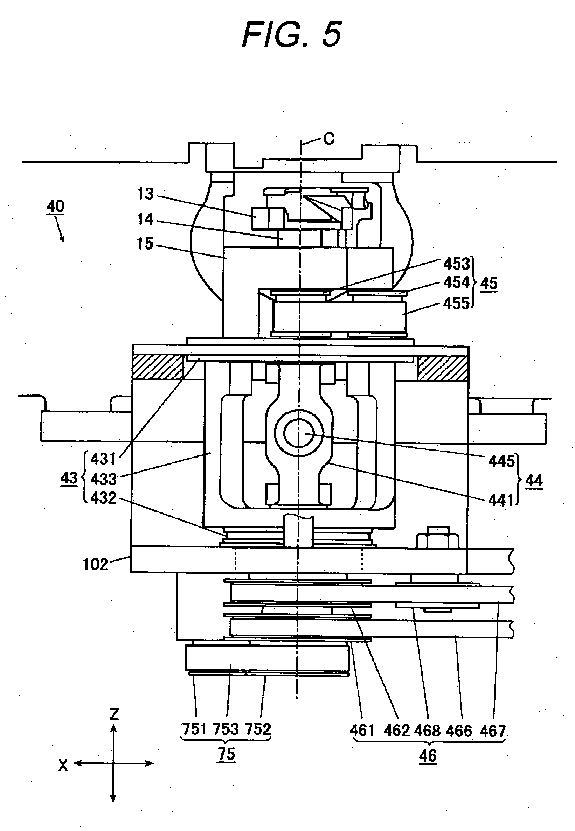

A first embodiment according to the invention will be described with reference to Figs. 1 to 13.

A sewing machine 100 which will be described below as the embodiment is a so-called electronic cycle sewing machine and has a holding frame serving as a cloth holding portion for holding a cloth which is a workpiece to be sewn. The holding frame is relatively moved with respect to a needle so that a sewing pattern based on predetermined sewing data is formed on the cloth held on the holding frame.

Herein, a direction in which a needle 11 which will be described below carries out a vertical motion is defined to be a Z-axis direction (a vertical direction), an orthogonal direction to the Z-axis direction is defined to be an X-axis direction (a transverse direction), and an orthogonal direction to both the Z-axis direction and the X-axis direction is defined to be a Y-axis direction (a longitudinal direction).

The sewing machine 100 mainly includes a needle bar 12 for holding the needle 11 at a lower end thereof and carrying out a vertical motion in the Z-axis direction, a needle vertical moving mechanism 20 for vertically moving the needle by using a sewing machine motor 21 as a driving source, a needle bar rotating mechanism 30 for rotating the needle bar 12 around a center line thereof in the Z-axis direction, a shuttle 13 for entangling a lower thread with an upper thread inserted into the needle 11, a differential transmission mechanism 40 having an input shaft 41 and an output shaft 42 through which a power from the sewing machine motor 21 is transmitted to the shuttle 13 and in which a phase difference between the input shaft 41 and the output shaft 42 is adjustable, a power transmission mechanism 70 for transmitting a torque from the sewing machine motor 21 to the input shaft 41 of the differential transmission mechanism 40, a cloth moving mechanism 80 serving (a moving mechanism) for holding a cloth and optionally carrying out moving and positioning operations along an X-Y plane, a controller 90 (sewing control means) configured to control an operation of each of the components, and a sewing machine frame 101 for supporting each of the structures in the sewing machine 100.

As shown in Fig. 1, the sewing machine frame 101 has an arm portion 101a forming an upper part of the sewing machine 100 and extended in the Y-axis direction, a bed portion 101b forming a lower part of the sewing machine 100 and extended in the Y-axis direction, and a vertical drum portion 101c for coupling the arm portion 101a and the bed portion 101b which are positioned in the upper and lower parts.

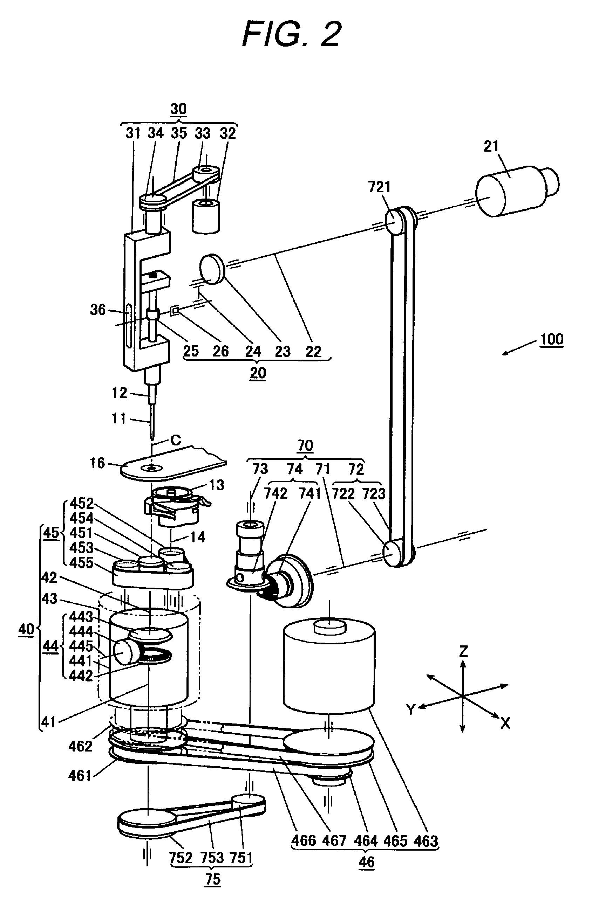

As shown in Figs. 1 and 2, the needle vertical moving mechanism 20 includes an upper shaft 22 supported rotatably in the Y-axis direction in the arm portion 101a, a sewing machine motor 21 for applying a rotating force from one of ends of the upper shaft 22, a needle bar crank 23 provided on the other end of the upper shaft 22, a crank rod 24 having one of ends coupled to an eccentric position with respect to a rotation center of the needle bar crank 23, and a needle bar holder 25 for transmitting a vertical motion from the crank rod 24 to the needle bar 12.

The upper shaft 22 is directly coupled to an output shaft of the sewing machine motor 21 and is rotated by the sewing machine motor 21. The rotation of the upper shaft 22 is converted into a vertically reciprocating motion by the needle bar crank 23 and the crank rod 24, and the vertically reciprocating motion is transmitted to the needle bar 12 through the needle bar holder 25.

The needle 11 supported on the needle bar 12 is disposed fixedly onto an axial center (a center) of the needle bar 12, and a line passing through the axial center is set to be a center line C.

A rotating motion around the center line C is applied to the needle bar 12 by means of the needle bar rotating mechanism 30. Thus, a square piece 26 provided rotatably around an axis in the Y-axis direction at the other end of the crank rod 24 is fitted in a concave portion formed on the needle bar holder 25, and an internal surface of the concave portion vertically interposes the square piece 26 to couple the crank rod 24 and the needle bar holder 25 to each other. Even if the needle bar holder 25 is rotated together with the needle bar 12, consequently, the square piece 26 slides on an inside of the concave portion so that decoupling is not carried out. Thus, it is possible to apply a vertical motion from the crank rod 24 while permitting the rotation of the needle bar 12.

As shown in Fig. 1, the needle bar rotating mechanism 30 is provided inside a distal end portion of the arm portion 101a and, as shown in Fig. 2, includes a needle bar rotation base 31 supporting the needle bar 12 in a vertically movable manner, a needle rotation drive motor 32 serving as a rotation driving source of the needle bar 12, and transmission means for transmitting a rotating force from the needle rotation drive motor 32 to the needle bar rotation base 31.

The needle bar rotation base 31 supports the needle bar 12 slidably in the Z-axis direction by means of a needle bar metal (a bearing formed of a metal) which is not shown, and is supported rotatably around the Z axis by means of the sewing machine frame 101 at upper and lower ends thereof. Moreover, a guide groove 36 is formed on the needle bar rotation base 31 in the Z-axis direction. A detent extended in the Y-axis direction from the needle bar holder 25 is to be inserted in the guide groove 36. The needle bar rotation base 31 supports the needle bar 12 to be rotated around the Z axis together with the needle bar rotation base 31 while permitting the vertical motion of the needle bar 12. Moreover, the center line C of the needle bar 12 and a rotating center line of the needle bar rotation base 31 are designed to be set onto the same line.

The transmission means includes a driver sprocket 33 provided on an output shaft of the needle rotation drive motor 32, a driven sprocket 34 which is concentric with the rotating center line of the needle bar rotation base 31 and is provided fixedly onto an upper end of the needle bar rotation base 31, and a timing belt 35 laid over the sprockets 33 and 34. Consequently, it is possible to adjust a rotation angle of the needle bar rotation base 31 and the needle bar 12 around the center line C by driving the needle rotation drive motor 32.

As shown in Fig. 2, the power transmission mechanism 70 includes a lower shaft 71 supported rotatably in the Y-axis direction in the bed portion 101b, a first transmission mechanism 72 for transmitting a torque from the upper shaft 22 to the lower shaft 71, a transmission shaft 73 supported rotatably in the Z-axis direction in the bed portion 101b, a second transmission mechanism 74 for transmitting a torque from the lower shaft 71 to the transmission shaft 73, and a third transmission mechanism 75 for transmitting a torque from the transmission shaft 73 to the input shaft 41 of the differential transmission mechanism 40.

The first transmission mechanism 72 includes a driver sprocket 721 provided on the upper shaft 22, a driven sprocket 722 provided on the lower shaft 71, and a timing belt 723 laid over the sprockets 721 and 722 in the vertical drum portion 101c. Consequently, the lower shaft 71 can be rotated synchronously with the upper shaft 22.

The second transmission mechanism 74 includes a bevel gear 741 provided on one of ends of the lower shaft 71, and a bevel gear 742 provided on an upper end of the transmission shaft 73. Consequently, the lower shaft 71 and the transmission shaft 73 which are orthogonal to each other can be rotated synchronously with each other.

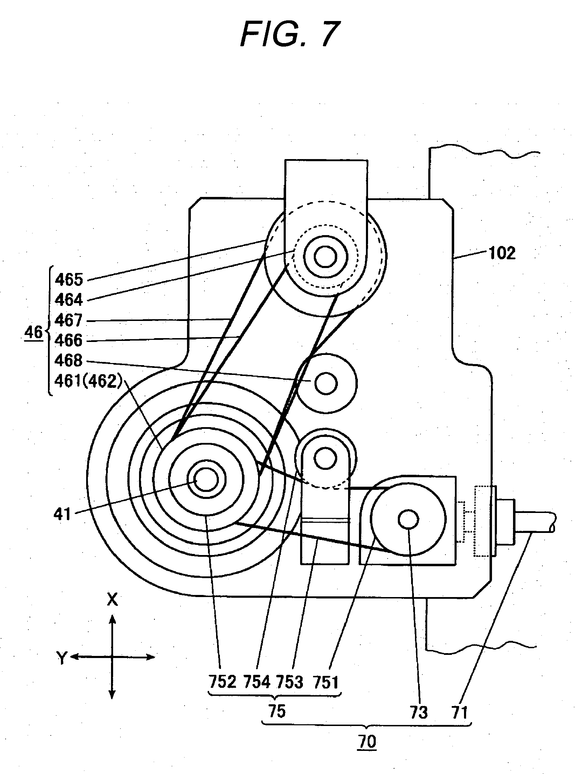

The third transmission mechanism 75 includes a driver sprocket 751 provided on a lower end of the transmission shaft 73, a driven sprocket 752 provided on the input shaft 41 of the differential transmission mechanism 40, a timing belt 753 laid over the sprockets 751 and 752 in the bed portion 101b, and a tension pulley 754 (Fig. 7) for applying a tension to the timing belt 753. Consequently, the transmission shaft 73 and the input shaft 41 of the differential transmission mechanism 40 are rotated synchronously with each other.

Accordingly, the power transmission mechanism 70 can transmit a torque from the sewing machine motor 21 to the differential transmission mechanism 40 while synchronizing the rotation of the upper shaft 21 (an up and down moving cycle of the needle bar 12) and the rotation of the shuttle 1.

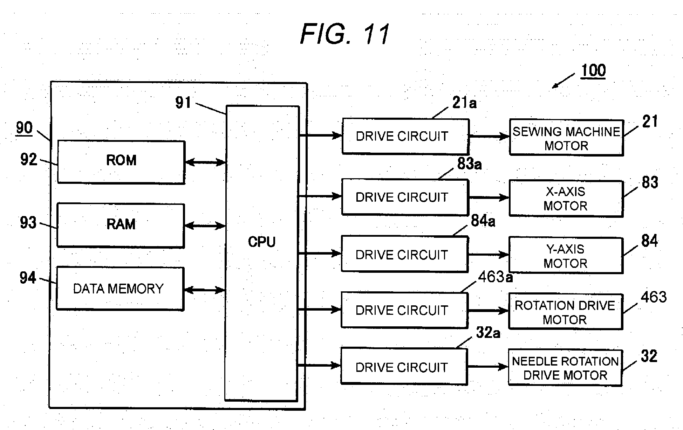

As shown in Fig. 1, the cloth moving mechanism 80 includes a holding frame 81 for holding a workpiece on an upper surface of the bed portion 101b, a support arm 82 for supporting the holding frame 81 movably in upward and downward directions, an X-axis motor 83 (Fig. 11) for moving the holding frame 81 in the X-axis direction through the support arm 82, and a Y-axis motor (Fig. 11) for moving the holding frame 81 in the Y-axis direction through the support arm 82.

The cloth moving mechanism 80 can move and place the workpiece to different positions on the X-Y plane through the holding frame 81 so that stitching is carried at each position for each stitch to form any formation of a seam.

The shuttle 13 and the differential transmission mechanism 40 will be described with reference to Figs. 2 to 7.

The shuttle 13 is a so-called full rotating horizontal shuttle, and is disposed under a throat plate 16 and includes a support shaft 14 in a lower part of the shuttle 13, and the support shaft 14 is supported through a shuttle base 15 rotatably around the Z axis. The shuttle base 15 is provided fixedly onto an upper part of a rotation base 43 of the differential transmission mechanism 40 and can be rotated around the center line C of the needle bar 12 together with the rotation base 43. Consequently, the shuttle 13 can turn around the line C.

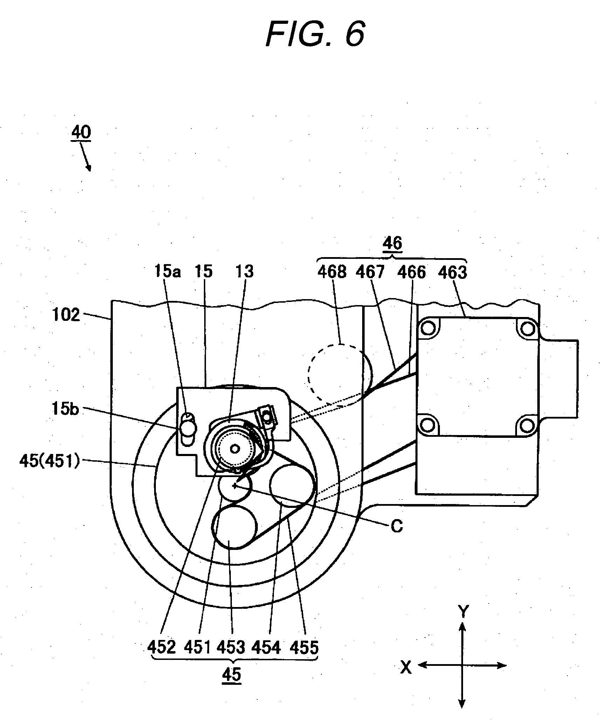

Moreover, a hook of the shuttle 13 passes by the needle 11 to catch the upper thread. Therefore, it is necessary to finely adjust a distance between the center line C and a center line of the support shaft 14 of the shuttle 13. Therefore, the shuttle base 15 is attached to the rotation base 43 with a slot 15a and a setscrew 15b (see Fig. 6). Consequently, the setscrew 15b is loosened to enable the fine adjustment.

The differential transmission mechanism 40 is supported on a supporting base 102 which is attached to one of ends of the bed portion 101b and integrated with the machine frame 101 below the needle bar 12.

The differential transmission mechanism 40 has a function of transmitting, to the shuttle 13, the rotating force of the sewing machine motor 21 from the power transmission mechanism 70 to rotate the shuttle 13 about the support shaft 14, a function of rotating a position of the shuttle 13 around the center line C, and a function of correcting a varition in a phase around the support shaft 14 through the rotation of the shuttle position.

In other words, the differential transmission mechanism 40 includes the input shaft 41 coupled to the sewing machine motor 21 and serving to input the rotating force applied from the sewing machine motor 21 through the power transmission mechanism 70, the output shaft 42 coupled to the shuttle 13 and serving to output the rotating force transmitted from the input shaft 41 to the shuttle 13 side, an inter-shaft transmission portion 44 having a support frame 441 for supporting the input shaft 41 and the output shaft 42 and serving to transmit the rotating force between the shafts, a shuttle transmission portion 45 for transmitting the rotating force from the output shaft 42 to the support shaft 14 of the shuttle 13, the rotation base 43 holding the shuttle base 15 and supported rotatably around the center line C by means of the supporting base 102, and a rotation providing mechanism 46 configured to provide rotating motions to the support frame 441 and the rotation base 43.

The rotation base 43 includes a circular top plate portion 431 supported concentrically with the center line C and rotatably in the upper surface part of the supporting base 102, a cylindrical portion 432 supported concentrically with the center line C and rotatably in the lower part of the supporting base 102, and a strut portion 433 for coupling them integrally with each other.

The top plate portion 431 has a center opened circularly and an upper end of the output shaft 42 is loosely fitted in the opening portion 431a so as to be protruded upward.

The shuttle transmission portion 45 includes a driver sprocket 451 provided fixedly to the upper end of the output shaft 42 which is protruded from the opening portion 431a of the top plate portion 431, a driven sprocket 452 which is adjacent to the driver sprocket 451 and is provided fixedly to a lower end of the support shaft 14 of the shuttle 13, an idler sprocket 453 which is pivotally supported around the Z axis in a position at a reverse side to the driven sprocket 452 with the driver sprocket 451 interposed over an upper surface of the top plate portion 431, a tension pulley 454 which is pivotally supported around the Z axis over an upper surface of the top plate portion 431, and a double-sided timing belt 455 laid over the sprockets and the tension pulley 454.

As shown in Fig. 6, the double-sided timing belt 455 is laid over the driven sprocket 452, the driver sprocket 451 and the idler sprocket 453 to meander thereamong. Teeth on an internal surface of the double-sided timing belt 455 are engaged with outer peripheral surfaces of the driven sprocket 452 and the idler sprocket 453, and are engaged with an outer peripheral surface of the driver sprocket 451. Moreover, the tension pulley 454 applies a tension to the double-sided timing belt 455 at an inside of the belt 455.

With the structure, when the driver sprocket 451 is rotated together with the output shaft 42, the driven sprocket 452 is rotated in a reverse direction to the driver sprocket 451 through the double-sided timing belt 455.

In the inter-shaft transmission portion 44, the support frame 441 is supported rotatably around the center line C by means of the rotation base 43 at an inside of the rotation base 43, and furthermore, the support frame 441 rotatably supports the input shaft 41 and the output shaft 42 around the center line C.

The inter-shaft transmission portion 44 includes a first bevel gear 442 provided fixedly to an opposed end of the input shaft 41, a second bevel gear 443 provided fixedly to an opposed end of the output shaft 42, and a transmission member 445 for pivotally supporting a transmission bevel gear 444 to be engaged with both of the first and second bevel gears 442 and 443 which are opposed to each other.

The support frame 441 has cylindrical portions on upper and lower sides thereof, a cylindrical portion 441a on the lower side is inserted into the cylindrical portion 432 of the rotation base 43, and the cylindrical portion 441b on the upper side is inserted into the opening portion 431a of the top plate portion 431 in the rotation base 43. Consequently, the support frame 441 can be rotated around the center line C independently of the rotation base 43.

Moreover, the input shaft 41 is concentrically supported pivotally through a bearing at an inside of the cylindrical portion 441a on the lower side of the support frame 441, and the output shaft 42 is concentrically supported pivotally through a bearing at an inside of the cylindrical portion 441b on the upper side.

Furthermore, an almost square frame-shaped structure is formed between the lower cylindrical portion 441a and the upper cylindrical portion 441b in the support frame 441, and the axial transmission member 445 which is orthogonal to the center line C via the opposed ends of the input shaft 41 and the output shaft 42 is rotatably supported by the frame-shaped portion.

The transmission bevel gear 444 provided on the transmission member 445 is engaged with both of the first and second bevel gears 442 and 443.

With the structure, the inter-shaft transmission portion 44 forms a so-called differential gear mechanism.

The rotation providing mechanism 46 includes a first driven sprocket 461 (a first driven member) which is provided fixedly to a lower end of the lower cylindrical portion 441a of the support frame 441 and to which a rotating force to be applied to the support frame 441 is input, a second driven sprocket 462 (a second driven member) which is provided fixedly to a lower end of the cylindrical portion 432 of the rotation base 43 and to which a rotating force to be applied to the rotation base 43 is input, a rotation drive motor 463 serving as a rotating and driving source of the support frame 441 and the rotation base 43, a first driver sprocket 464 (a first driver member) for inputting a rotating force from the rotation drive motor 463 to the first driven sprocket 461, a second driver sprocket 465(a second driver member) for inputting the rotating force from the rotation drive motor 463 to the second driven sprocket 462, a timing belt 466 laid between the first driver sprocket 464 and the first driven sprocket 461, a timing belt 467 laid between the second driver sprocket 465 and the second driven sprocket 462, and a tension pulley 468 (Fig. 7) for applying a tension to the timing belt 467.

The first driven sprocket 461 and the second driven sprocket 462 have effective diameters set to be equal to each other, and the first driver sprocket 464 and the second driver sprocket 465 have effective diameters set to be 1 to 2. In other words, a rotating angle to be applied to the support frame 441 is a half of that of the rotation base 43 through a driving operation of the rotation drive motor 463.

Furthermore, both the first driver sprocket 464 and the second driver sprocket 465 are provided fixedly to the output shaft of the rotation drive motor 463. Therefore, the sprockets 464 and 465 are always rotated interlockingly with each other at the same time.

According to the differential transmission mechanism 40 having the configuration described above, when simply rotating the shuttle 13 without turning the shuttle 13 around the center line C, a rotating force from the sewing machine motor 21 is input to the input shaft 41 through the power transmission mechanism 70 while maintaining the rotation drive motor 463 stopped. Consequently, a rotation in a reverse direction is transmitted at an equal rotating speed to that of the input shaft 41 from the input shaft 41 to the output shaft 42 via the first bevel gear 442, the transmission bevel gear 444 and the second bevel gear 443. In other words, the transmission bevel gear 444 is disposed between the input shaft 41 and the output shaft 42, and reverses and transmits the rotating force of the input shaft 41 to the output shaft 42. The transmission member 445 is rotatably supported on the support frame 441. The transmission bevel gear 444 and the transmission member body 445 may be formed as a one-piece component, or may be separate components that are coupled together.

Furthermore, a rotation in a reverse direction is transmitted at an equal rotating speed to that of the output shaft 42 from the output shaft 42 to the support shaft 14 and the shuttle 13 via the driver sprocket 451 of the shuttle transmission portion 45, the double-sided timing belt 455 and the driven sprocket 452. Consequently, the differential transmission mechanism 40 implements a function for transmitting, to the shuttle 13, the rotating force applied from the sewing machine motor 21 to the power transmission mechanism 70, thereby rotating the shuttle 13 around the support shaft 14.

Moreover, the differential transmission mechanism 40 drives the rotation drive motor 463 to rotate the rotation base 43 through the second driver sprocket 465, the timing belt 467 and the second driven sprocket 462, thereby revolving and moving the shuttle 13 on the top plate portion 431 around the center line C when rotating the shuttle 13 around the center line C in order to avoid a generation of a hitch stitch. Consequently, the differential transmission mechanism 40 implements a function for rotating the position of the shuttle 13 around the center line C of the needle bar 12.

When the shuttle 13 is rotated around the center line C during sewing, that is, during the rotation of the shuttle 13, moreover, it is revolved and moved around the input shaft 41 and the output shaft 42 which are transmitting the rotation to the shuttle 13 so that a phase in the rotation around the support shaft 14 of the shuttle 13 changes.

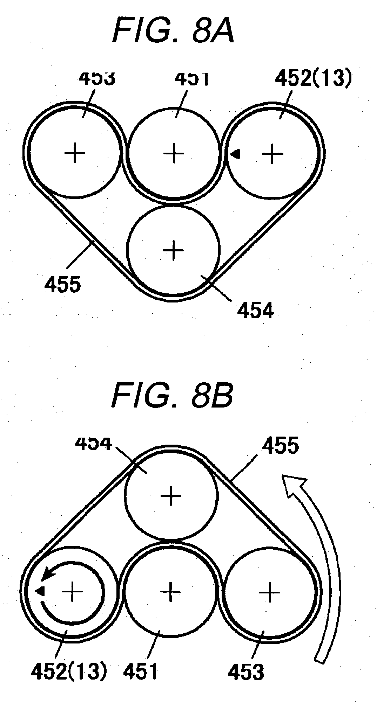

In other words, as shown in an example of Figs. 8A and 8B, a phase change corresponding to a rotating angle is generated around the support shaft 14 with respect to a variation in a rotating angle with respect to the center line C over the shuttle 13 through a variation in an orientation of the shuttle 13 which is caused by the rotation around the center line C and a variation caused by the generation of the rotation between the driver sprocket 451 and the driven sprocket 452 by the rotation.

In the example of Figs. 8A and 8B, there is shown the case in which the driver sprocket 451 is fixed for simplicity of explanation and the shuttle 13 is rotated by 180° in a counterclockwise direction. As shown in Fig. 8B, the shuttle 13 generates a rotation in the counterclockwise direction of (a rotating angle of 180°) + (a rotating angle of 180° of the driven sprocket 452 through the timing belt 455) = 360° with respect to the rotation of 180° in the counterclockwise direction of the shuttle 13. At this time, a phase of the shuttle 13 is obtained as seen from a needle position and a variation in the phase of the shuttle 13 seen from the needle position is 360° - 180° = 180° in the counterclockwise direction.

As a result, there is caused a problem in that the hook of the shuttle 13 cannot catch the upper thread from the needle 11 in a preset proper timing (an angle of the upper shaft).

In the differential transmission mechanism 40, when the rotation drive motor 463 is driven in order to rotate the shuttle 13 around the center line C, the first driver sprocket 464 provided on the output shaft of the motor is rotated together with the second driver sprocket 465 so that the support frame 441 is also rotated in the same direction as the rotation base 43 through the timing belt 466 and the first driven sprocket 461. The first driver sprocket 464 has the effective diameter which is a half of that of the second driver sprocket 465. Therefore, the support frame 441 rotates at a half angle in the same direction as the rotation base 43.

When the support frame 441 rotates at the angle, the transmission member 445 supported on the support frame 441 is moved by the rotating angle. Further, the transmission member 445 itself is rotated because the transmission bevel gear 444 provided on the transmission member 445 is engaged with the first bevel gear 442. Therefore, the second bevel gear 443 and the output shaft 42 rotate in the same direction by twice the rotating angle of the support frame 441 due to the movement of the transmission member 445 at the rotating angle and its own rotation.

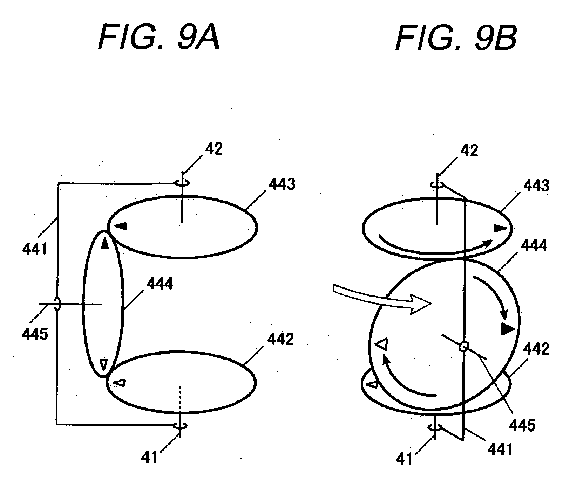

Figs. 9A and 9B show an example. In Figs. 9A and 9B, for simplicity of explanation, it is assumed that all of the first and second bevel gears 442 and 443 and the transmission bevel gear 444 are rotated at an equal ratio. There is illustrated the case in which the first bevel gear 442 is fixed and the support frame 441 is rotated by 90° in a counterclockwise direction as seen from above. As shown in Fig. 9B, the second bevel gear 443 carries out a rotation in the counter clockwise direction of (a rotating angle of 90°) + (a rotating angle of 90° through the transmission bevel gear 444) = 180° with respect to the rotation of 90° in the counterclockwise direction of the support frame 441 and the transmission bevel gear 444.

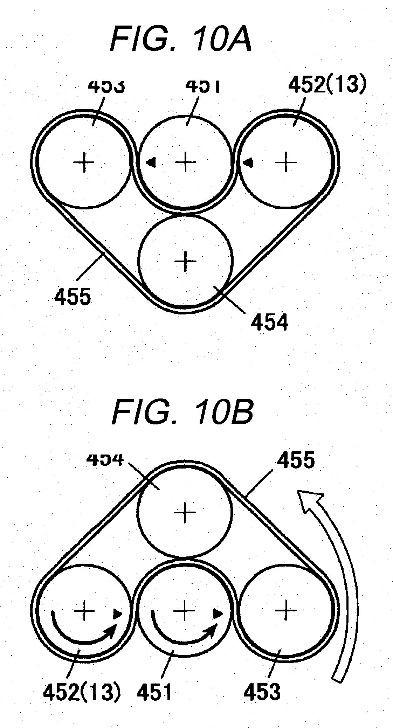

When the rotation base 43 is rotated at a predetermined angle, thus, the support frame 441 carries out a rotation at a half angle thereof in the same direction. For example, as shown in Figs. 10A and 10B, when the rotation base 43 is rotated by 180° in the counterclockwise direction and the support frame 441 is rotated by 90° in the counterclockwise direction, the output shaft 42 and the driver sprocket 451 are rotated by 180° in the counterclockwise direction. Consequently, the rotating angles of the driven sprocket 452 and the shuttle 13 are decreased from 360° to 180° and they are rotated by 180° in the counterclockwise direction.

In other words, in the case in which a mark of ▲ attached to the shuttle 13 in Figs. 10A and 10B represents a hook position, the hook is positioned on the center line C side in Fig. 10A and is maintained to be positioned on the center line C side also in a state of Fig. 10B after the shuttle 13 is rotated by 180° around the center line C. Also in the rotation around the center line C of the shuttle 13, accordingly, the shuttle 13 executes its operation in the same phase with respect to the needle 11.

Consequently, the differential transmission mechanism 40 implements a function for correcting a variation in a phase around the support shaft 14 through the rotation of the shuttle position.

Although the actual differential transmission mechanism 40 to be used has the same size and the same number of teeth as those of the first bevel gear 442 and the second bevel gear 443, the transmission bevel gear 444 to be used has a smaller size and a smaller number of teeth to reduce the size of the differential transmission mechanism 40. However, an amount of a transmission between the first and second bevel gears 442 and 443 is not influenced.

In the example of Fig. 10, moreover, there is shown the case in which the rotation base 43 is rotated by 180° in the counterclockwise direction. Also in the case in which the rotation base 43 is rotated at any angle in any direction, however, the phase of the shuttle 13 is properly corrected. Also in the case in which the input shaft 41 is rotated and driven, moreover, the correction is carried out in the same manner.

The sewing machine 100 includes a controller 90 (sewing control means) shown in Fig. 11 in order to control the operations of each portion and each member.

The controller 90 includes an ROM 92 in which a program for controlling an operation in a sewing work is stored, an RAM 93 serving as a work area for an arithmetic processing, a nonvolatile data memory 94 serving as storage means for storing sewing data, and a CPU 91 for executing a program in the ROM 92.

Moreover, the CPU 91 is connected to a sewing machine motor 21, an X-axis motor 83, a Y-axis motor 84, a rotation drive motor 463 and a needle rotation drive motor 32 through a sewing machine motor drive circuit 21a, an X-axis motor drive circuit 83a, a Y-axis motor drive circuit 84a, a rotation drive motor drive circuit 463a, a needle rotation drive motor drive circuit 32a respectively and controls a driving operation of each of the motors 21, 83, 84, 463 and 32.

Moreover, the sewing machine motor 21 includes an encoder which is not shown and a detecting angle thereof is output to the CPU 91. Furthermore, the motors 83, 84, 463 and 32 are stepping motors and their origin retrieving means (not shown) are connected to the CPU 91, and the CPU 91 can recognize an origin position of each of the motors from the outputs.

Operating amounts of the X-axis motor 83 and the Y-axis motor 84 for each stitch to sew a predetermined sewing pattern are stored in order in the sewing data stored in the data memory 94. The CPU 91 reads the operating amounts of the X-axis motor 83 and the Y-axis motor 84 every stitch in the sewing work, and furthermore, controls an operation for driving the X-axis motor 83 and the Y-axis motor 84 depending on the respective operating amounts.

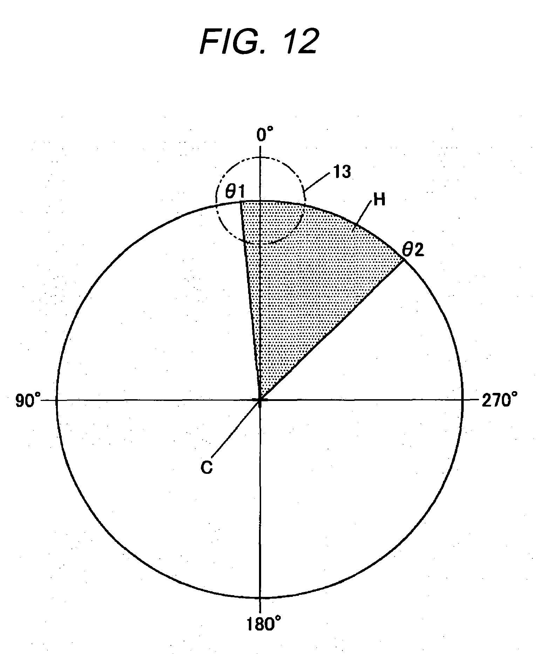

In addition, the CPU 91 executes a control for avoiding a hitch stitch with the execution of the sewing control based on the sewing data. As shown in Fig. 12, when needle handling is carried out toward an angle range of θ1 to θ2 with respect to a direction from the position of the needle bar center line C toward the shuttle 13, the hitch stitch is generated. A direction in which the hitch stitch is generated varies depending on a type of the shuttle or the other various conditions. Therefore, it is also possible to specify the angles θ1 and θ2 which are obtained by carrying out a trial sewing operation for each sewing machine. The angles θ1 and θ2 are pre-stored in the data memory 94.

When reading the operating amounts of the X-axis motor 83 and the Y-axis motor 84 every stitch of the sewing data in the sewing work, the CPU 91 calculates a sewing direction for next needle handling from each of the operating amounts and decides whether a sewing direction calculated based on a current position of the shuttle 13 is included in the angle range of θ1 to θ2 or not. If the sewing direction is within the angle range, before stitching, the needle rotation drive motor 32 and the rotation drive motor 463 are driven until it reaches an angle outside the angle range of θ1 to θ2 and the needle bar 12 and the shuttle 13 are thus rotated around the center line C. If the sewing direction is not included in the angle range of θ1 to θ2, the rotating positions of the needle bar 12 and the shuttle 13 are maintained.

By executing the control for avoiding a hitch stitch over all stitches of the sewing data, it is possible to prevent the generation of the hitch stitch in the whole sewing pattern.

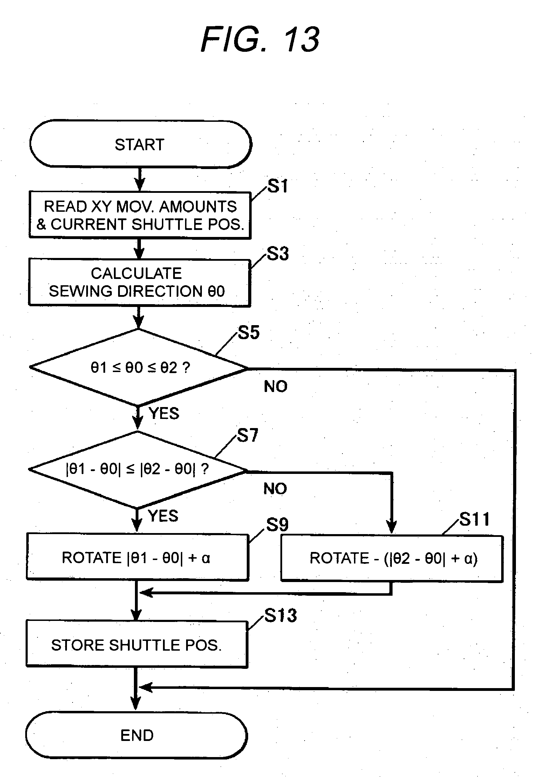

Base on Fig. 13, the control for avoiding a hitch stitch which is to be processed by the CPU 91 will be specifically described.

First of all, data on moving amounts in the X-axis direction and the Y-axis, direction and data on a current angle of the shuttle 13 around the center line C are read from the sewing data in the sewing work (Step S1).

Then, an angle θ0 of a sewing direction with respect to a straight line connecting a position of the center line C and a central position of the shuttle 13 is calculated (Step S3).

Furthermore, it is determined whether the calculated angle θ0 of the sewing direction is within the angle range from θ1 to θ2 or not (Step S5).

If the angle θ0 is outside the angle range, the processing is ended and stitching is carried out. If the angle θ0 is within the angle range, it is determined whether the shuttle 13 is to be rotated in a normal or reverse direction (Step S7).

In other words, if an absolute value of (01 - 00) is equal to or smaller than that of (02 - 00), the shuttle 13 and the needle bar 12 are rotated in a normal direction at an angle obtained by adding, to the absolute value, an angle α to be a margin (Step S9).

If the absolute value of (01 - 00) is greater than that of (02 - 00), moreover, the shuttle 13 and the needle bar 12 are rotated in a reverse direction at an angle obtained by adding, to the absolute value, the angle α to be the margin (Step S 11).

It is desirable that the angle α to be the margin can be set optionally, and the set value is stored in the data memory 94.

Furthermore, an angle around the center line C of the shuttle 13 after the rotation is stored for a next decision of a hitch stitch angle area and the control for avoiding the hitch stitch is ended. This control is executed before forming each stitch.

In the control, it is possible to always grasp the angle of the shuttle 13 around the center line C by retrieving the origin of the rotation drive motor 463 and then storing a controlled amount successively. However, an angle sensor may be provided in the rotation base 43 or the needle bar rotation base 31 to acquire the angle of the shuttle 13 through the detection.

According to the structure, the sewing machine 100 rotates the shuttle 13 and the needle bar 12 around the center line C. Consequently, it is possible to always avoid the generation of the hitch stitch effectively. By implementing a perfect stitch over the whole sewing work, it is possible to dramatically enhance sewing quality.

By the differential transmission mechanism 40, moreover, the phase of the shuttle 13 with respect to the needle 11 is maintained to be constant even if the shuttle 13 is rotated around the center line C. Therefore, it is possible to carry out a stable sewing operation.

Moreover, the first driver sprocket 464 and the second sprocket 465 in the rotation providing mechanism 46 of the differential transmission mechanism 40 are coupled to each other on the same shaft. Therefore, they always carry out an interlocking rotation. Thus, in the case in which an external force is applied to the rotation base 43 of the shuttle 13 so that a rotation is generated in a state in which power supplies of the whole sewing machine 100 are turned OFF so that an axial holding force of each motor is not generated, for example, the support frame 441 carries out an interlocking rotation at a half of the angle of the rotation base 43 through the second driven sprocket 462, the timing belt 467, the second driver sprocket 465, the first driver sprocket 464, the timing belt 466 and the first driven sprocket 462. As a result, when the rotation base 43 and the output shaft 42 carry out a rotation at an equal angle through the shuttle transmission portion 45, the rotation is not generated on the input shaft 41 side. Consequently, an interlocking motion is not generated in the needle vertical moving mechanism 20 from the input shaft 41 through the power transmission mechanism 70 and the upper shaft 21. Even if the rotation base 43 is rotated unexpectedly, accordingly, it is possible to effectively prevent a situation in which a vertical motion is generated over the needle bar.

The needle bar rotating mechanism 30 and the differential transmission mechanism 40 may share the same driving source. For example, it is also possible to employ a structure in which the power of the rotation drive motor 463 is transmitted to the needle bar rotation base 31 to be rotated by means of a well-known power transmission mechanism formed by a shaft, a gear mechanism or a belt mechanism which is provided in the sewing machine frame 101, or their combination. To the contrary, it is also possible to employ a structure in which the power of the needle rotation drive motor 32 is transmitted to the differential transmission mechanism 40 side through the well-known power transmission mechanism. Also in this case, it is desirable that the first driver sprocket 464 and the second driver sprocket 465 are coupled and provided on the same shaft in the middle of a power transmission path.

Moreover, the sewing machine 100 uses the belt mechanism for a power transmission in each portion. Therefore, a silence can be obtained more greatly than in the gear mechanism.

### Second Embodiment

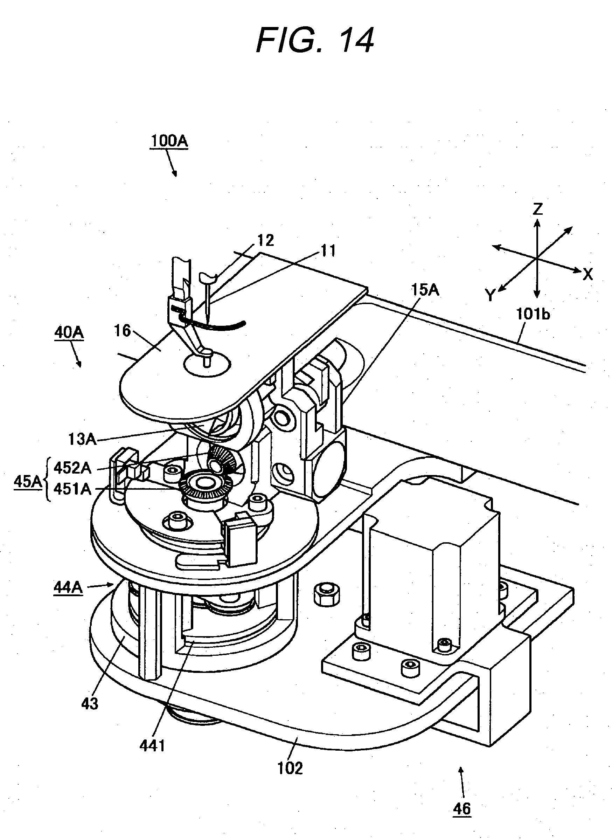

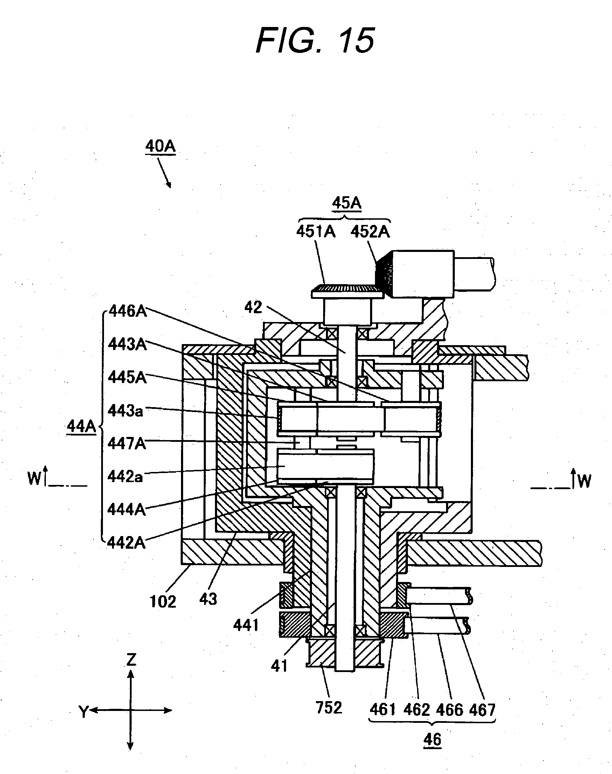

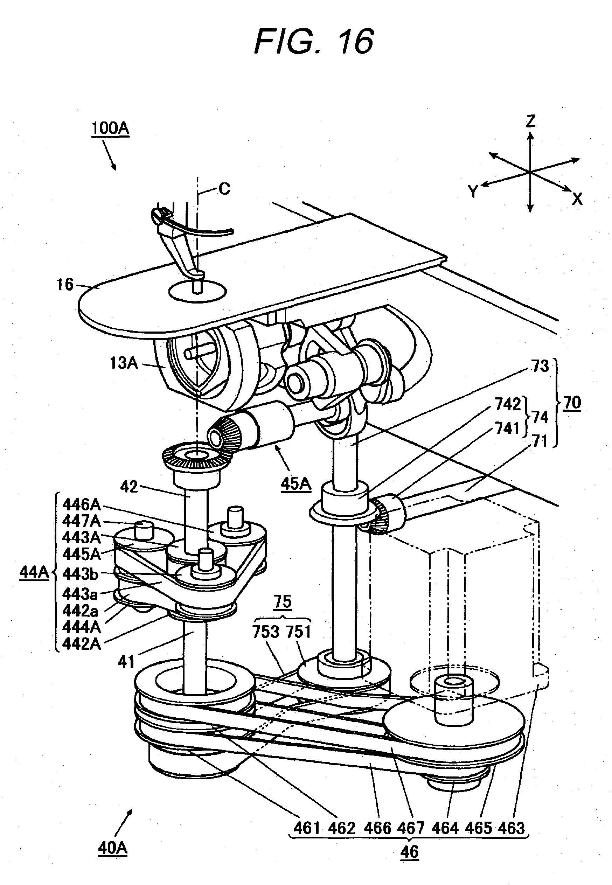

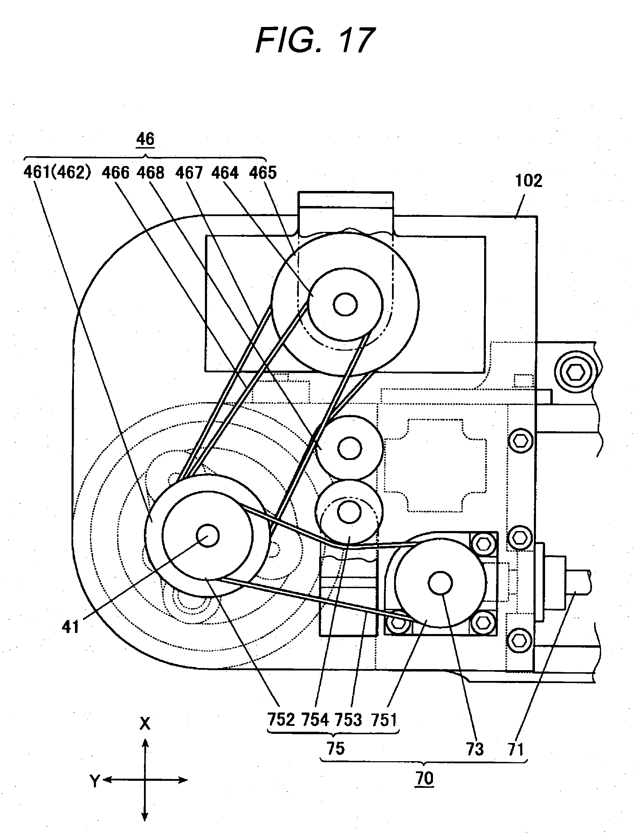

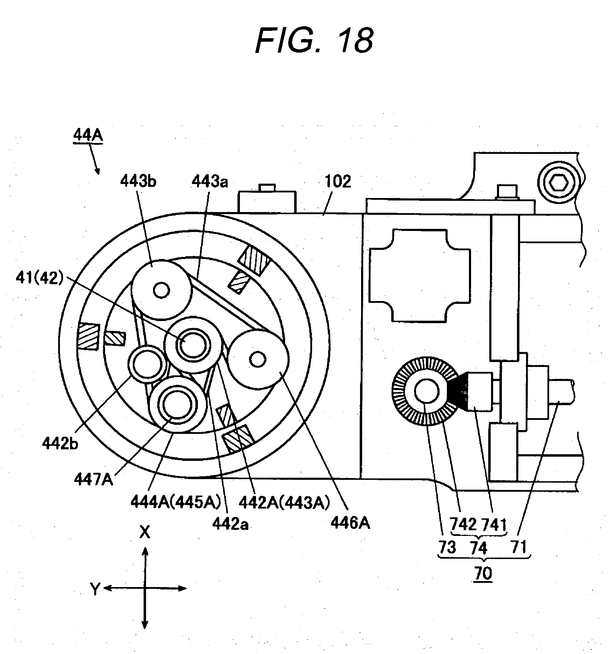

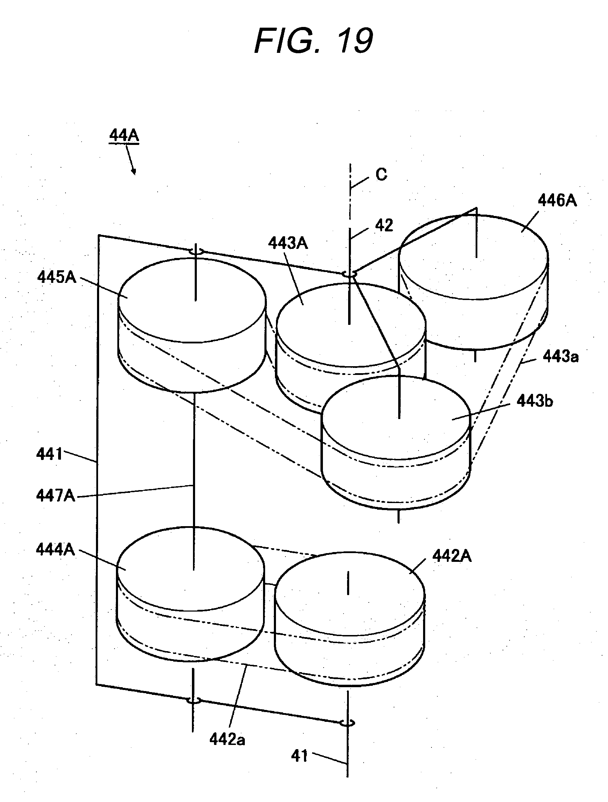

A second embodiment according to the invention will be described with reference to Figs. 14 to 22.

A sewing machine 100A according to the second embodiment is mainly different from the sewing machine 100 in that a shuttle 13A is a vertical shuttle, that is, a half rotating shuttle and a differential transmission mechanism 40A uses a differential belt mechanism in place of a differential gear mechanism, and the other structures having the same functions have the same reference numerals and repetitive description will be omitted. Moreover, it is assumed that structures which are not mentioned in the following description of the sewing machine 100A are the same as those in the sewing machine 100.

With reference to Figs. 14 to 21, the shuttle 13A and the differential transmission mechanism 40A will be described.

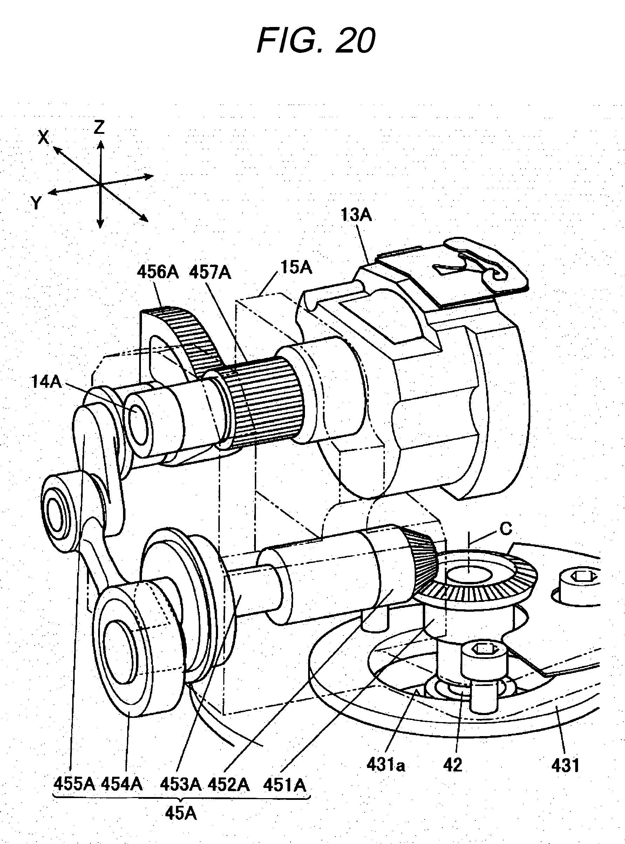

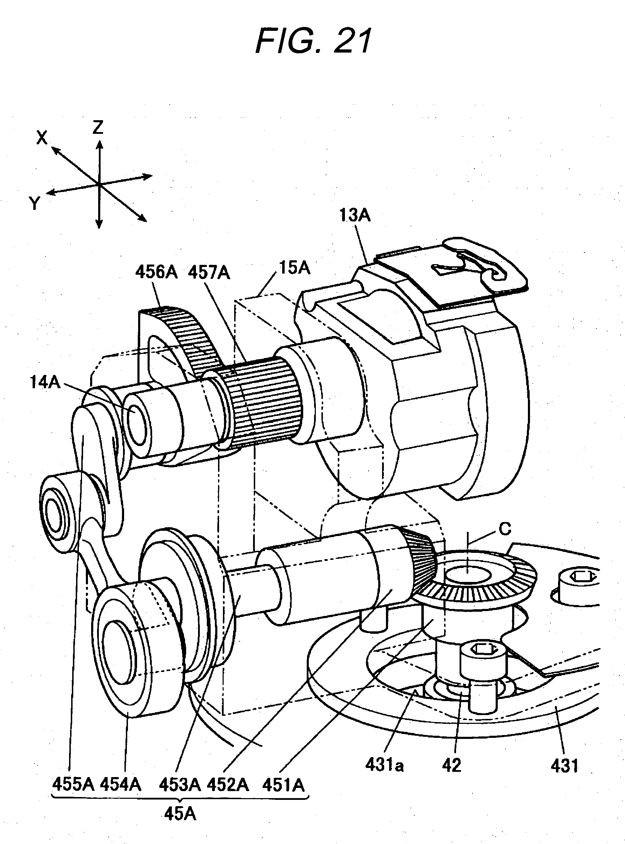

As shown in Figs. 20 and 21, the shuttle 13A is a so-called vertical half rotating shuttle, and a support shaft 14A provided in an orthogonal direction to a center line C is coupled to a driver provided in the shuttle 13A and serving to carry out a reciprocal rotation. The support shaft 14A is pivotally supported by a shuttle base 15A rotatably.

Moreover, the shuttle base 15A is provided fixedly to an upper surface of a rotation base 43 in the differential transmission mechanism 40A, and the shuttle base 15A and the shuttle 13A can carry out a rotation around the center line C together with the rotation base 43.

The differential transmission mechanism 40A is supported on a supporting base 102 and has a function for rotating the shuttle 13A, a function for rotating a position of the shuttle 13A around the center line C and a function for correcting a variation in a phase around the support shaft 14A through the rotation of the shuttle position in the same manner as the differential transmission mechanism 40.

In other words, the differential transmission mechanism 40A includes an input shaft 41 serving to input a rotating force from a sewing machine motor 21 through a power transmission mechanism 70 and disposed in such a manner that a shaft center thereof is coincident with the center line C, an output shaft 42 serving to output a rotating force transmitted from the input shaft 41 to the shuttle 13A side and disposed such that a shaft center thereof is coincident with the center line C, an inter-shaft transmission portion 44A having a support frame 441 for rotatably supporting the input shaft 41 and the output shaft 42 and serving to transmit a rotating force between the shafts, a shuttle transmission portion 45A for transmitting the rotating force from the output shaft 42 to the support shaft 14A of the shuttle 13A, a rotation base 43 serving to hold the shuttle base 15A and supported rotatably around the center line C through the supporting base 102, and a rotation providing mechanism 46 configured to provide rotating motions to the support frame 441 and the rotation base 43.

As shown in Figs. 20 and 21, the shuttle transmission portion 45A includes a main driving bevel gear 451A provided fixedly to an upper end of the output shaft 42 protruded from an opening portion 431a of a top plate portion 431, a driven bevel gear 452A which is engaged with the main driving bevel gear 451 A and is rotatable around an orthogonal center line to the center line C, a first crank shaft 453A to which the driven bevel gear 452A is provided fixedly, a crank rod 454A having one of ends coupled to an eccentric position to a rotation center of the crank shaft 453A, a second crank shaft 455A coupled to the other end of the crank rod 454A for carrying out a reciprocal rotation, a main wheel 456A provided fixedly to the second crank shaft 455A, and a pinion 457A provided fixedly to the support shaft 14A of the shuttle 13A and engaged with the main wheel 456A.

Moreover, all of the support shaft 14A of the shuttle 13A, the first crank shaft 453A and the second crank shaft 455A are supported on the shuttle base 15A such that all of rotating center lines are parallel with each other.

According to this configuration, a rotating motion of a single rotation of the output shaft 42 around the center line C is converted into a single reciprocating rotating motion around a direction perpendicular to the center line C, and the single reciprocating rotating motion is applied to the driver of the shuttle 13A.

The reference numeral 432b in Fig. 20 denotes an origin sensor of the rotation base 43 (a rotation drive motor 463).

The inter-shaft transmission portion 44A includes the support frame 441, a driver sprocket 442A provided fixedly to an opposed end of the input shaft 41, a driven sprocket 443A provided fixedly to an opposed end of the output shaft 42, a first transmission sprocket 444A for carrying out an interlocking rotation with the driver sprocket 442A through a timing belt 442a, a second transmission sprocket 445A and an idler sprocket 446A which are disposed adjacently to interposed the driven sprocket 443A therebetween, a double-sided timing belt 443a laid such that the second transmission sprocket 445A and the idler sprocket 446A come in contact with an internal surface of the belt and the driven sprocket 443A comes in contact with an external surface of the belt, a tension pulley 443b for applying a tension to the double-sided timing belt 443a, a tension pulley 442b for applying a tension to the timing belt 442a, and an axial transmission member 447A supported rotatably around a Z axis by the support frame 441 and serving to couple and support the first and second transmission sprockets 444A and 445A to carry out a simultaneous rotation.

All of the sprockets 442A, 443A, 444A, 445A and 446A have effective diameters set to be equal to each other, and are supported rotatably around the center line C or an axis which is parallel with the center line C.

The first transmission sprocket 444A and the second transmission sprocket 445A are provided fixedly to lower and upper ends of the transmission member 447A and carry out a simultaneous rotation with the transmission member 447A set to be an axis.

Moreover, the double-sided timing belt 443a is laid such that the second transmission sprocket 445A and the idler sprocket 446A come in contact with the internal surface of the double-sided timing belt 443a and the driven sprocket 443A comes in contact with the external surface of the double-sided timing belt 443a. Therefore, the second transmission sprocket 445A and the idler sprocket 446A are rotated in the same direction and the driven sprocket 443A carries out a rotation in a reverse direction thereto.

By the structures, when the input shaft 41 is rotated by a predetermined angle in a state in which the support member 441 is restrained, a rotation at an equal angle to that of the input shaft 41 in a reverse direction is transmitted to the output shaft 42 through each of the sprockets 442A, 444A, 445A and 443A and each of the timing belts 442a and 443a.

Moreover, when the support member 441 is rotated around the center line C in a state in which the input shaft 41 and the driver sprocket 442A are restrained, for example, the first transmission sprocket 444A is pulled by the timing belt 442a to carry out a rotation around the transmission member 447A at an equal angle to a rotating angle in a reverse direction to the rotation of the support member 441. Consequently, the second transmission sprocket 445A also carries out an interlocking rotation by an equal angle in the same direction. As a result, the driven sprocket 443A carries out a rotation at a double of the angle of the support member 441 in the rotating direction of the support member 441 by a rotation to be performed with the rotation of the support member 441 and a rotation to be transmitted from the second transmission sprocket 445A through the double-sided timing belt 443a.

Accordingly, the inter-shaft transmission portion 44A implements exactly the same function as the inter-shaft transmission portion 44 by means of a belt mechanism.

By the structure, when the differential transmission mechanism 40A rotates the rotation base 43 in order to avoid a hitch stitch, the support frame 441 carries out a rotation at a half angle in the same direction as the rotation base 43. As a result, the output shaft 42 is rotated at an equal angle in the same direction as the rotation base 43 with respect to the input shaft 41. Even if the shuttle 13A carries out a rotation around the center line C, therefore, it does not cause a variation in a phase around the support shaft 14A so that an operation timing for catching an upper thread through the shuttle 13A is maintained in a proper state.

The sewing machine 100A includes the same controller 90 as that in the sewing machine 100, and executes a control for avoiding a hitch stitch in the same manner. Accordingly, it is possible to carry out a sewing work in a perfect stitch over a whole sewing pattern based on sewing data.

Thus, the sewing machine 100A produces the same technical advantages as those of the sewing machine 100, and furthermore, the belt mechanism using the timing belts 442a and 443a is employed in the inter-shaft transmission portion 44A of the differential transmission mechanism 40A. Therefore, it is possible to obtain a silence more greatly than the sewing machine 100 employing the differential gear mechanism.

Although the vertical half rotating shuttle is employed as the shuttle 13A in the sewing machine 100A, it is also possible to provide a vertical full rotating shuttle in any structure in which the a full rotation is transmitted from the driven bevel gear 452A of the shuttle transmission portion 45A to the support shaft 14A.

Moreover, the inter-shaft transmission portion 44A of the sewing machine 100A may be provided on the sewing machine 100 or the inter-shaft transmission portion 44 of the sewing machine 100 may be provided on the sewing machine 100A.

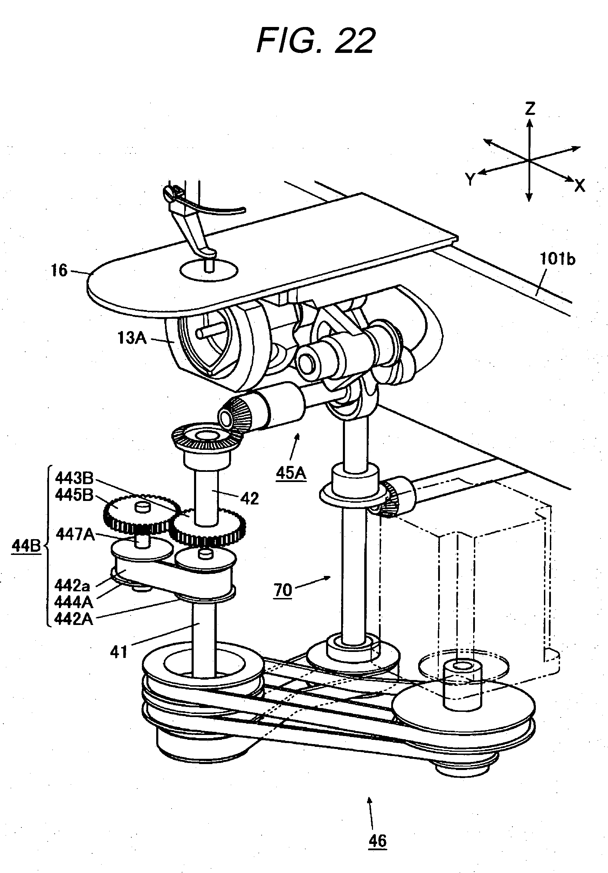

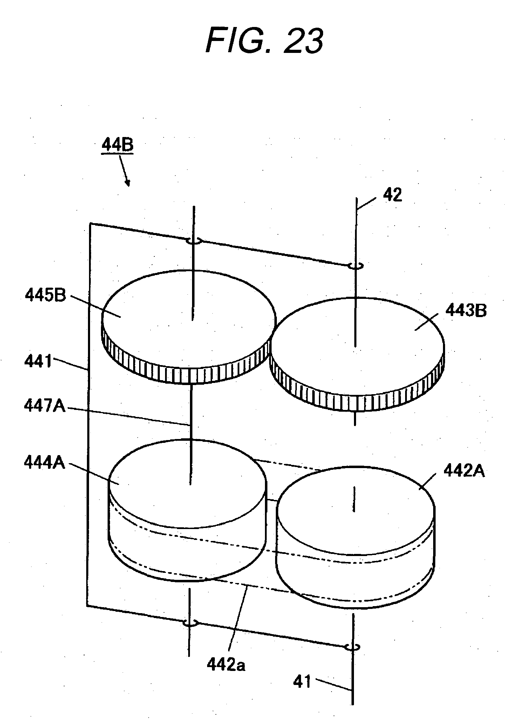

In Figs. 22 and 23, description will be given to another example of the inter-shaft transmission portion. In an inter-shaft transmission portion 44B, the same structures as those of the inter-shaft transmission portion 44A have the same reference numerals and repetitive description will be omitted.

In other words, the inter-shaft transmission portion 44B includes a driver sprocket 442A provided fixedly to an upper end of an input shaft 41, a first transmission sprocket 444A coupled to the driver sprocket 442A through a timing belt 442a, an axial transmission member 447A having a lower end to which the first transmission sprocket 444A is provided fixedly and supported rotatably on a support frame 441, a transmission spur gear 445B provided fixedly to an upper end of the transmission member 447A, and a driven spur gear 443B which is provided fixedly to a lower end of an output shaft 42 and is to be engaged with the transmission spur gear 445B.

By the structure, the inter-shaft transmission portion 44B can transmit a reverse rotation between the input shaft 41 and the output shaft 42 to each other.

Moreover, the first transmission sprocket 444A is rotated at an equal angle to a rotating angle in a reverse direction to the rotating direction through a rotation around a center line C of the support frame 441 in a state in which the input shaft 41 is stationary, and a rotation at a double of the rotating angle of the support frame 441 can be transmitted to the driven spur gear 443B and the output shaft 42 through the transmission spur gear 445B. Accordingly, the inter-shaft transmission portion 44B implements exactly the same function as the inter-shaft transmission portion 44A. The inter-shaft transmission portion 44B employs the spur gears 443B and 445B in a part of the structure. Therefore, it is possible to easily implement a transmission in a reverse rotating direction between the input shaft 41 and the output shaft 42. Consequently, it is possible to reduce the number of the components as compared with the inter-shaft transmission portion 44A for transmitting a reverse rotation by means of the belt mechanism. Thus, the structure can be simplified.

Although the inter-shaft transmission portion 44B has the structure in which the belt mechanism is provided on the input shaft 41 side and the gear mechanism is provided on the output shaft 42 side, it is also possible to employ a structure in which the gear mechanism is provided on the input shaft 41 side and the belt mechanism is provided on the output shaft 42 side.

According to the embodiments described above, the rotation providing mechanism 46 is configured such that a rotating motion is provided from the rotation drive motor 463 to the rotation base 43 and the support frame 441, using the belts and the sprockets. However, the rotation providing mechanism 46 may be configured to rotate the rotation base 43 and the support frame 441 using a gear mechanism. In that case, rotating motions in the same direction are applied to the rotation base 43 and the support frame 441, and a rotating angle of the rotation base 43 is twice the rotating angle of the support frame 441. Moreover, the rotating motions are applied to the rotation base 43 and the support frame 441 using two gears that rotate simultaneously by the same shaft.

## Claims

1. A sewing machine (100, 100A) comprising:
a sewing machine motor (21);
a needle bar (12) holding a needle (11), wherein the needle bar (12) has a vertical center line (C) and moves up and down along the center line (C) interlockingly with the sewing machine motor (21);
a shuttle (13) configured to turn around the center line (C) and to rotate interlockingly with the sewing machine motor (21) to entangle an upper thread with a lower thread;
a needle bar rotating mechanism (30) configured to rotate the needle bar (12) about the center line (C);
a rotation base (43) rotatably supporting the shuttle (13) and supported by a sewing machine frame (101) so as to be rotatable about the center line (C) of the needle bar (12) with respect to the sewing machine frame (101);
a rotation drive motor (463) serving as a driving source of a rotating motion of the rotation base (43); and
a differential transmission mechanism (40, 40A) including an input shaft (41) coupled to the sewing machine motor (21) and an output shaft (42) coupled to the shuttle (13), and wherein the differential transmission mechanism (40, 40A) is configured such that a phase difference between the input shaft (41) and the output shaft (42) is adjustable,
**characterized in that** the input shaft (41) and the output shaft (42) are aligned on the center line (C) of the needle bar (12), and
the differential transmission mechanism (40, 40A) comprises:
a support frame (441) disposed so as to be rotatable around the input shaft (41) and the output shaft (42);
a transmission member (445, 447A) rotatably supported by the support frame (441) and transmits a rotating force between the input shaft (41) and the output shaft (42) such that a rotation direction is reversed;
a first driven member (461) provided on the support frame (441) and to which a rotating force for the support frame (441) is input;
a second driven member (462) provided on the rotation base (43) and to which a rotating force for the rotation base (43) is input;
a first driver member (464) via which the rotating force is input from the rotation drive motor (463) to the first driven member (461); and
a second driver member (465) via which the rotating force is input from the rotation drive motor (463) to the second driven member (462),
wherein an amount of a rotation transmission from the first driver member (464) to the first driven member (461) is half an amount of a rotation transmission from the second driver member (465) to the second driven member (462), and
the first driver member (464) and the second driver member (465) are provided on the same shaft in a fixed manner such that the first driver member (464) and the second driver member (465) rotate simultaneously.

2. The sewing machine (100, 100A) according to claim 1, wherein the rotation drive motor (463) also serves as a driving source of a rotating motion of the needle bar (12) through the needle bar rotating mechanism (30).

3. The sewing machine (100) according to claim 1 or 2, wherein the differential transmission mechanism (40) has a differential gear mechanism (44).

4. The sewing machine (100A) according to claim 1 or 2, wherein the transmission member (447A) of the differential transmission mechanism (40A) transmits the rotating force between the input shaft (41) and the output shaft (42) by using belts (442a, 443a) or a combination of a belt (442a) and a gear (445b).

5. The sewing machine (100, 100A) according to any one of claims 1 to 4, wherein the rotating force from the first driver member (464) to the first driven member (461) and the rotating force from the second driver member (465) to the second driven member (462) are transmitted by using a belt (466, 467) and a pulley or a sprocket, respectively.

6. The sewing machine (100, 100A) according to any one of claims 1 to 4, wherein the rotating force from the first driver member (464) to the first driven member (461) and the rotating force from the second driver member (465) to the second driven member (462) are transmitted by using gears, respectively.

7. The sewing machine (100, 100A) according to any one of claims 1 to 6, further comprising:
a moving mechanism (80) configured to move a workpiece on a plane perpendicular to the center line (C) of the needle bar (12); and
sewing control means (90) which, if a direction to move the workpiece by the moving mechanism (80) is within a range in which a hitch stitch occurs, drives the rotation drive motor (463) such that the direction to move the workpiece becomes outside the range.

## Patentansprüche

1. Nähmaschine (100, 100A), umfassend:
einen Nähmaschinenmotor (21);
eine Nadelstange (12), welche eine Nadel (11) hält, wobei die Nadel-stange (12) eine vertikale Mittellinie (C) aufweist und sich entlang der Mittellinie (C) mit dem Nähmaschinenmotor (21) gekoppelt auf und ab bewegt;
ein Schiffchen (13), welches dazu ausgebildet ist, sich um die Mittellinie (C) zu drehen und mit dem Nähmaschinenmotor (21) gekoppelt zu rotieren, um einen Oberfaden mit einem Unterfaden zu verschlingen;
einen Nadelstangenrotationsmechanismus (30), welcher dazu ausgebildet ist, die Nadelstange (12) um die Mittellinie (C) zu rotieren;
eine Rotationsbasis (43), an welcher das Schiffchen (13) rotierbar gehalten ist und welche von einem Nähmaschinenrahmen (101) gehalten ist, derart, dass sie bezüglich des Nähmaschinenrahmens (101) um die Mittellinie (C) der Nadelstange (12) rotierbar ist;
einen Rotationsantriebsmotor (463), welcher als eine Antriebsquelle für eine Rotationsbewegung der Rotationsbasis (43) dient; und
einen Differentialtransmissionsmechanismus (40, 40A), umfassend eine mit dem Nähmaschinenmotor (21) gekoppelte Eingangswelle (41) und eine mit dem Schiffchen (13) gekoppelte Ausgangswelle (42) und wobei der Differentialtransmissionsmechanismus (40, 40A) so ausgebildet ist, dass eine Phasendifferenz zwischen der Eingangswelle (41) und der Ausgangswelle (42) einstellbar ist,
**dadurch gekennzeichnet, dass** die Eingangswelle (41) und die Ausgangswelle (42) auf die Mittellinie (C) der Nadelstange (12) ausgerichtet sind und
dass der Differentialtransmissionsmechanismus (40, 40A) umfasst:
einen Halterahmen (441), welcher so angeordnet ist, dass er um die Eingangswelle (41) und die Ausgangswelle (42) rotierbar ist;
ein Transmissionsglied (445, 447A), welches von dem Halterahmen (441) rotierbar gehalten ist und eine Rotationskraft zwischen der Eingangswelle (41) und der Ausgangswelle (42) überträgt, derart, dass eine Rotationsrichtung umgekehrt wird;
ein erstes angetriebenes Glied (461), welches an dem Halterahmen (441) bereitgestellt ist und in welches eine Rotationskraft für den Halterahmen (441) eingegeben wird;
ein zweites angetriebenes Glied (462), welches an der Rotationsbasis (43) bereitgestellt ist und in welches eine Rotationskraft für die Rotationsbasis (43) eingegeben wird;
ein erstes Treiberglied (464), über welches die Eingabe der Rotationskraft von dem Rotationsantriebsmotor (463) in das erste angetriebene Glied (461) erfolgt; und
ein zweites Treiberglied (465), über welches die Eingabe der Rotationskraft von dem Rotationsantriebsmotor (463) in das zweite angetriebene Glied (462) erfolgt,
wobei ein Betrag einer Rotationsübertragung von dem ersten Treiberglied (464) auf das erste angetriebene Glied (461) halb so groß ist wie ein Betrag einer Rotationsübertragung von dem zweiten Treiberglied (465) auf das zweite angetriebene Glied (462) und
wobei das erste Treiberglied (464) und das zweite Treiberglied (465) an derselben Welle fest bereitgestellt sind, derart, dass das erste Treiberglied (464) und das zweite Treiberglied (465) gleichzeitig rotieren.

2. Nähmaschine (100, 100A) nach Anspruch 1, wobei der Rotationsantriebsmotor (463) auch als eine Antriebsquelle für eine Rotationsbewegung der Nadelstange (12) durch den Nadelstangenrotationsmechanismus (30) dient.

3. Nähmaschine (100) nach Anspruch 1 oder 2, wobei der Differentialtransmissionsmechanismus (40) einen Differentialgetriebemechanismus (44) aufweist.

4. Nähmaschine (100A) nach Anspruch 1 oder 2, wobei das Transmissionsglied (447A) des Differentialtransmissionsmechanismus (40A) die Rotationskraft zwischen der Eingangswelle (41) und der Ausgangswelle (42) mittels Riemen (442a, 443a) oder einer Kombination aus einem Riemen (442a) und einem Zahnrad (445b) überträgt.

5. Nähmaschine (100, 100A) nach einem der Ansprüche 1 bis 4, wobei die Übertragung der Rotationskraft von dem ersten Treiberglied (464) auf das erste angetriebene Glied (461) und die Übertragung der Rotationskraft von dem zweiten Treiberglied (465) auf das zweite angetriebene Glied (462) mittels eines Riemens (466, 467) und einer Riemenscheibe bzw. einer Zahnriemenscheibe erfolgt.

6. Nähmaschine (100, 100A) nach einem der Ansprüche 1 bis 4, wobei die Übertragung der Rotationskraft von dem ersten Treiberglied (464) auf das erste angetriebene Glied (461) und die Übertragung der Rotationskraft von dem zweiten Treiberglied (465) auf das zweite angetriebene Glied (462) jeweils mittels Zahnrädern erfolgt.

7. Nähmaschine (100, 100A) nach einem der Ansprüche 1 bis 6, ferner umfassend:
einen Bewegungsmechanismus (80), welcher dazu ausgebildet ist, ein Werkstück auf einer senkrecht zu der Mittellinie (C) der Nadelstange (12) verlaufenden Ebene zu bewegen; und
ein Nähsteuerungsmittel (90), welches dann, wenn eine Richtung zum Bewegen des Werkstücks mittels des Bewegungsmechanismus (80) innerhalb eines Bereichs liegt, in dem ein Knotenstich auftritt, den Rotationsantriebsmotor (463) antreibt, derart, dass die Richtung zum Bewegen des Werkstücks außerhalb des Bereichs zu liegen kommt.

## Revendications

1. Machine à coudre (100, 100A) comprenant :
un moteur de machine à coudre (21) ;
une barre à aiguille (12) supportant une aiguille (11), dans laquelle la barre à aiguille (12) comprend une ligne centrale verticale (C) et se déplace vers le haut et vers le bas le long de la ligne centrale (C) par interverrouillage avec le moteur de machine à coudre (21) ;
une navette (13) configurée pour tourner autour de la ligne centrale (C) et pour entrer en rotation par interverrouillage avec le moteur de machine à coudre (21) pour entremêler un fil de dessus avec un fil de dessous ;
un mécanisme de rotation de barre à aiguille (30) configuré pour faire tourner la barre à aiguille (12) autour de la ligne centrale (C) ;
une base de rotation (43) supportant en rotation la navette (13) et supportée par un cadre de machine à coudre (101) de manière à être rotative autour de la ligne centrale (C) de la barre à aiguille (12) par rapport au cadre de machine à coudre (101) ;
un moteur d'entraînement en rotation (463) servant de source d'entraînement d'un mouvement de rotation de la base de rotation (43) ; et
un mécanisme de transmission différentiel (40, 40A) comprenant un arbre d'entrée (41) accouplé au moteur de machine à coudre (21) et un arbre de sortie (42) accouplé à la navette (13), et dans lequel le mécanisme de transmission différentiel (40, 40A) est configuré de sorte qu'une différence de phase entre l'arbre d'entrée (41) et l'arbre de sortie (42) soit réglable,
**caractérisé en ce que** l'arbre d'entrée (41) et l'arbre de sortie (42) sont alignés sur la ligne centrale (C) de la barre à aiguille (12), et le mécanisme de transmission différentiel (40, 40A) comprend :
un cadre de support (441) disposé de manière à être rotatif autour de l'arbre d'entrée (41) et l'arbre de sortie (42) ;
un élément de transmission (445, 447A) supporté en rotation par le cadre de support (441) et transmettant une force de rotation entre l'arbre d'entrée (41) et l'arbre de sortie (42) de sorte qu'une direction de rotation soit inversée ;
un premier élément entraîné (461) disposé sur le cadre de support (441) et auquel une force de rotation pour le cadre de support (441) est fournie ;
un second élément entraîné (462) disposé sur la base de rotation (43) et auquel une force de rotation pour la base de rotation (43) est fournie ;
un premier élément d'entraînement (464) par le biais duquel la force de rotation est fournie depuis le moteur d'entraînement de rotation (463) vers le premier élément entraîné (461) ; et
un second élément d'entraînement (465) par le biais duquel la force de rotation est fournie depuis le moteur d'entraînement en rotation (463) vers le second élément entraîné (462),
dans laquelle une quantité d'une transmission de rotation depuis le premier élément d'entraînement (464) vers le premier élément entraîné (461) représente la moitié d'une transmission de rotation depuis le second élément d'entraînement (465) vers le second élément entraîné (462), et
le premier élément d'entraînement (464) et le second élément d'entraînement (465) sont disposés sur le même arbre d'une manière fixe de sorte que le premier élément d'entraînement (464) et le second élément d'entraînement (465) tournent simultanément.

2. Machine à coudre (100, 100A) selon la revendication 1, dans laquelle le moteur d'entraînement en rotation (463) sert également de source d'entraînement d'un mouvement de rotation de la barre à aiguille (12) par le biais du mécanisme de rotation de barre à aiguille (30).

3. Machine à coudre (100) selon la revendication 1 ou 2, dans laquelle le mécanisme de transmission différentiel (40) comprend un mécanisme d'engrenage différentiel (44).

4. Machine à coudre (100A) selon la revendication 1 ou 2, dans laquelle l'élément de transmission (447A) du mécanisme de transmission différentiel (40A) transmet la force de rotation entre l'arbre d'entrée (41) et l'arbre de sortie (42) au moyen de courroies (442a, 443a) ou une combinaison d'une courroie (442a) et d'un engrenage (445b).

5. Machine à coudre (100, 100A) selon l'une quelconque des revendications 1 à 4, dans laquelle la force de rotation depuis le premier élément d'entraînement (464) vers le premier élément entraîné (461) et la force de rotation depuis le second élément d'entraînement (465) vers le second élément entraîné (462) sont transmises au moyen d'une courroie (466, 467) et d'une poulie ou d'un pignon, respectivement.

6. Machine à coudre (100, 100A) selon l'une quelconque des revendications 1 à 4, dans laquelle la force de rotation du premier élément d'entraînement (464) vers le premier élément entraîné (461) et la force de rotation du second élément d'entraînement (465) vers le second élément entraîné (462) sont transmises au moyen d'engrenages, respectivement.

7. Machine à coudre (100, 100A) selon l'une quelconque des revendications 1 à 6, comprenant en outre :
un mécanisme de déplacement (80) configuré pour déplacer une pièce sur un plan perpendiculaire à la ligne centrale (C) de la barre à aiguille (12) ; et
des moyens de commande de couture (90), lesquels, si une direction de déplacement de la pièce par le mécanisme de déplacement (80) se situe dans une plage dans laquelle un point d'accrochage se produit, entraînent le moteur d'entraînement en rotation (463) de sorte que la direction de déplacement de la pièce sorte de la plage.
